# EUROPEAN PATENT APPLICATION

(11) **EP 0 532 229 A1**
(43) Date of publication of application: **17.03.1993**
(21) Application number: 92308001.4
(22) Date of filing: 03.09.1992
(51) Int. Cl.: G02B 6/25, H01L 21/00

(54) **Method of polishing silicon-based optical waveguides**

(30) Priority: 12.09.1991 US 758017
(71) Applicant: AT&T Corp., New York, NY 10013-2412 (US)
(72) Inventor: Bogert, Gail Ann, Bethlehem, Pennsylvania 18017 (US); Gluszynski, Detlef Bernd, Earl Township, Pennsylvania 19512 (US); Minford, William James, Lehigh Township, Pennsylvania 18067 (US); Thorsten, Neal Henry, Lebanon, New Jersey 08833 (US)
(74) Representative: Johnston, Kenneth Graham

(57) **Abstract**

A method is disclosed for simultaneously cutting a silicon wafer containing optical waveguides and polishing the endfaces of the waveguides. Utilizing a resinoid diamond saw operating at an appropriate feet rate and revolution speed, a single cut will both dice apart the wafer and suitably polish the exposed waveguide endfaces exposed during the dicing.

## Description

### Background of the Invention

### Technical Field

The present invention relates to a method of polishing silicon-based optical waveguides and, more particularly, to a one-step method for both dicing the silicon wafer and polishing the waveguide endfaces.

### Description of the Prior Art

Optical waveguide devices have recently been gaining interest as a means of providing numerous functions on a silicon substrate, including polarization splitting, wavelength multiplexing, and power splitting. An exemplary silicon-based optical waveguide structure is disclosed in U. S. Patent 4,902,086 issued to C. H. Henry et al. on February 20, 1990. In a preferred embodiment, an optical waveguide comprises a core portion on a first cladding layer, the waveguide having a smoothed surface or core-cladding interface with an overlying second cladding layer. Resulting waveguide structures can be made in a closely-spaced, side-by-side relationship, as is desirable for lateral (evanescent-field) coupling between waveguides. It has been noted that one of the time-consuming, and therefore costly, steps in producing such a device is the polishing of the waveguide endfaces. A conventional polishing technique may require a second piece of glass epoxied to the substrate surface, where the epoxy must have an appropriate refractive index so as not to attenuate the signal within the waveguide. The wafer with the protective glass cover is then diced to separate the wafer into individual substrate sections. Each separate section is subsequently placed into a conventional grinding/polishing fixture to polish the waveguide endfaces. Each separate substrate must be processed twice to polish both endfaces. The throughput on finished, polished substrates is thus limited by this prior art polishing process.

### Summary of the Invention

The limitation of the prior art is addressed by the present invention which relates to a method of dicing and polishing silicon-based optical waveguides and, more particularly, to a one-step method for simultaneously dicing the wafer and polishing the waveguide endfaces.

In an exemplary process of the present invention, a silicon wafer containing optical waveguides is mounted on an adhesive structure and simultaneously diced and polished using a resinoid diamond blade running at an appropriate feet rate (e.g., inches/second) and speed (e.g, RPM). A single throughcut utilizing the resinoid diamond blade has been found to provide reasonably polished endfaces for the waveguides.

An advantage of the technique of the present invention is that a standard three-step process (dicing, grinding and polishing the first endface; dicing, grinding and polishing the second endface) is replaced with a single dice/polish operation. The replacement results in significantly reducing the time required to provided polished endfaces, thus maximizing wafer throughput on the manufacturing line.

Other and further advantages of the present invention will become apparent during the course of the following discussion and by reference to the accompanying drawings.

### Brief Description of the Drawing

Referring now to the drawings,
FIG. 1 illustrates, in a cross-sectional view, an exemplary silicon-based optical waveguiding structure;
FIG. 2 illustrates an exemplary silicon wafer including a plurality of optical waveguides, with the dicing/polishing locations noted; and
FIG. 3 is a graph of insertion loss data comparing waveguide structures formed using the prior art three-step process with the novel one-step dice/polish operation of the present invention.

### Detailed Description

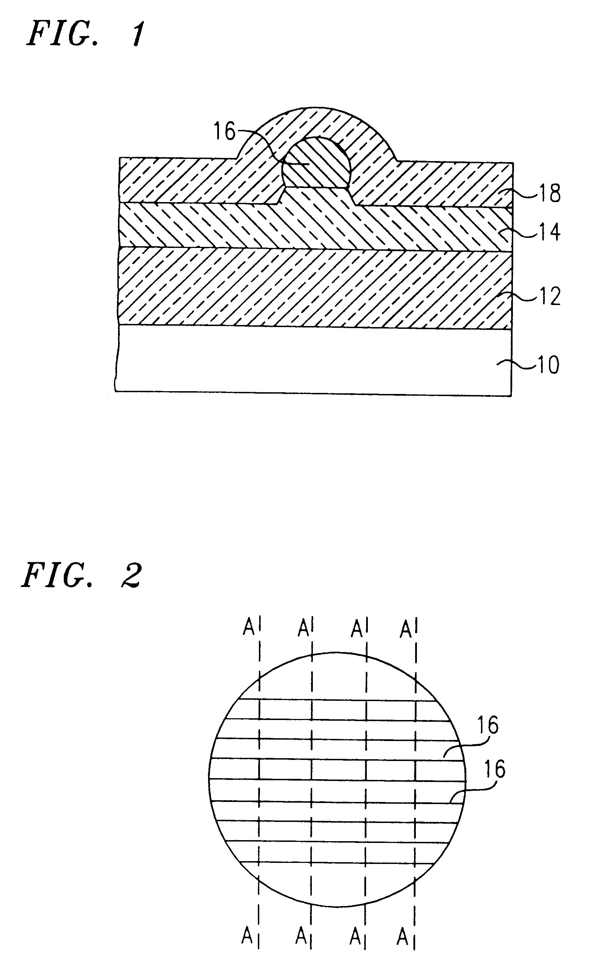

FIG. 1 illustrates in a cut-away view an exemplary silicon-based waveguide structure which may be diced/polished in accordance with the technique of the present invention. The structure includes a silicon wafer 10 and a relatively thick interface layer 12 disposed over the surface thereof. In one embodiment, interface layer 12 may comprise a high pressure thermal oxide. A first cladding layer 14, comprising phosphorous-doped TEOS, is formed to cover interface layer 12. Waveguide region 16 is formed as shown in FIG. 1, where region 16 comprises a material, for example, phosphosilicate glass (PSG), with a higher refractive index than first cladding layer 14. A second cladding layer 18 is then formed to cover waveguide region 16. In order for the optical signal propagating along waveguide region 16 to be constrained within the guiding area, the refractive index of region 16 must be greater than the refractive index of both first and second cladding layers 14, 18.

In the fabrication of devices such as that shown in FIG. 1, a relatively large silicon wafer is processed to form a predetermined number of optical waveguiding substrates. Utilizing conventional silicon processing techniques, the wafer is subjected to a number of fabrication steps to form the required layers (e.g., thermal oxidation, deposition). In the prior art conventional process of forming an optical waveguide-containing substrate, the wafer, as shown in FIG. 2, would be diced along lines A-A to separate the wafer into separate substrates. It is to be understood that only a few such lines are indicated on FIG. 2, for the sake of clarity. Subsequent to the dicing operation of the prior art, the individual waveguide endfaces, denoted 20 and 22, would be individually ground and optically polished, the conventional polishing step being performed twice (once for each endface of the waveguide).

In accordance with the teachings of the present invention, the above-described dicing and polishing operations are replaced with a single step which simultaneously dices the wafer into separate substrates and polishes all the exposed waveguide endfaces. In particular, a silicon wafer containing the optical waveguides is mounted on an adhesive surface which may be cut into, but will hold the wafer essentially montionless. The wafer is subsequently cut, along lines A-A and B-B, utilizing a resinoid diamond blade where, advantageously, the resinoid blade is self-sharpening. It has been discovered that when the wafer is cut with the resinoid diamond blade operating at a suitable feet rate and speed of revolution, the endfaces of the waveguides formed as a result of the cut will be polished to a surface acceptable for most applications. In practice, feet rates varying from approximately 0.03 inch/second to 0.10 inch/second, and speeds varying from approximately 18,000 RPM to 35,000 RPM have been found acceptable.

### EXAMPLE

A silicon wafer was mounted on a thick plastic tape which as then mounted onto a chuck surface and held in place by means of a vacuum. A wide resinoid 9µm diamond blade was used, running at a speed of approximately 30,000 revolutions per minute (e.g., RPM) and progessing through the wafer at a rate of approximately 0.05 inch per second.

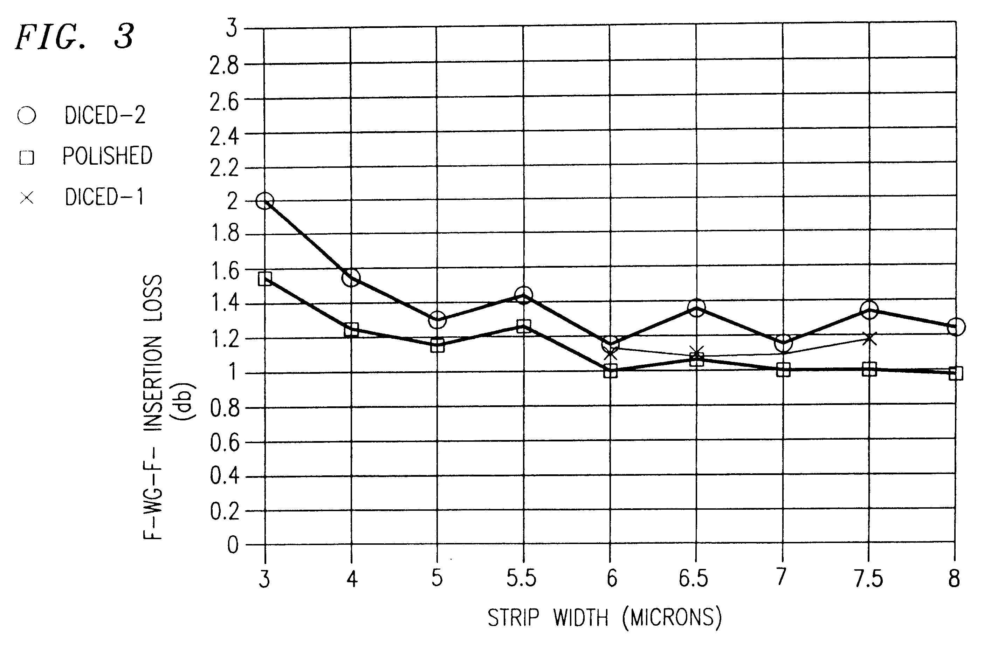

A comparison of the endface quality of waveguides polished utilizing the one-step approach of the present invention with the standard dicing/polishing operations are illustrated in FIG. 3. FIG. 3 is a graph of insertion loss along an exemplary device including an input fiber, optical waveguide, and output fiber. Insertion loss is defined as the ratio of the power (in dB) coming from the output fiber to the light coupled into the input fiber. The total insertion loss, therefore, includes the propagation loss through the optical waveguide plus two fiber-waveguide coupling interfaces. The graph of FIG. 3 includes values for waveguides ranging in core waveguide width from 3 microns to 8 microns. As shown, insertion loss for a conventional three-step diced/polished waveguide ranges from a value of about 1.5dB for a 3 micron width waveguide to about 1.0dB for an 8 micron width waveguide. Utilizing the simultaneous dice/polish operation of the present invention, the insertion loss is slightly greater, ranging from a value of approximately 2dB (for a 3 micron wide waveguide) to approximately 1.2dB (for an 8 micron wide waveguide).

## Claims

1. In the fabrication of silicon-based optical waveguides, a method of finishing the waveguide structure comprising the steps of:
a) providing a silicon wafer (10) including a plurality of optical waveguides (16) formed therein;
b) cutting said silicon wafer into a plurality of separate devices utilizing a resinoid diamond saw operating at a predetermined feet rate and revolution speed for forming waveguide endfaces (20,22) of an acceptable quality.

2. The method of claim 1 wherein in performing step b), the feet rate is within the range of approximately 0.03 inch/second to approximately 0. 10 inch/second.

3. The method of claim 1 wherein in performing step b), the saw speed is within the range of approximately 18,000 revolutions per minute to approximately 35,000 revolutions per minute.

4. The method of claim 1, wherein in performing step b), the resinoid diamond saw is operated at a speed of approximately 30,000 revolutions per minute and a feet rate of 0.05 inch per second.
